# EUROPÄISCHE PATENTANMELDUNG

(11) **EP 1 488 969 A1**
(43) Veröffentlichungstag der Anmeldung: **22.12.2004**
(21) Anmeldenummer: 04008645.6
(22) Anmeldetag: 08.04.2004
(51) Int. Cl.: B60R 22/46

(54) **Gurtstraffer**

(30) Priorität: 20.06.2003 DE 10327837
(71) Anmelder: TRW Automotive GmbH, 73553 Alfdorf (DE)
(72) Erfinder: Betz, Hans-Peter, 73560 Böbingen (DE)
(74) Vertreter: Strass, Jürgen

(57) **Zusammenfassung**

Ein Gurtstraffer (10) umfaßt ein Gehäuseteil (12), das ein langgestrecktes Zylinderrohr (18) aufweist, in dem ein Kolben (14) verschiebbar angeordnet ist. Der Gurtstraffer (10) umfaßt ferner einen Antrieb (16), der auf den Kolben (14) eine Antriebskraft ausüben kann. Das Gehäuseteil (12) ist T-förmig ausgebildet und hat einen sich quer vom Zylinderrohr (18) weg erstreckenden Fußabschnitt (20), der einstückig mit dem Zylinderrohr ausgebildet ist und einen Aufnahmeraum (30) für den Antrieb (16) bildet. Bei dem Verfahren zur Herstellung eines solchen Gurtstraffers (10), wird der den Aufnahmeraum (30) für den Antrieb (16) bildende Fußabschnitt (20) in dem Gehäuseteil (12) durch Innenhochdruck-Umformung geformt.

## Beschreibung

Die Erfindung betrifft einen Gurtstraffer mit einem Gehäuseteil, das ein langgestrecktes Zylinderrohr aufweist, in dem ein Kolben verschiebbar angeordnet ist, und mit einem Antrieb, der auf den Kolben eine Antriebskraft ausüben kann. Die Erfindung betrifft weiterhin ein Verfahren zur Herstellung eines solchen Gurtstraffers.

In der DE 43 07 062 A1 ist ein solcher Gurtstraffer beschrieben, bei dem das Gehäuseteil in einem Sockelblock sitzt. In dem Sockelblock ist eine Antriebskammer ausgebildet, in welcher sich ein Gasgenerator befindet. Um dem Explosionsdruck des Gasgenerators widerstehen zu können muß der Sockelblock eine ausreichende Festigkeit aufweisen und ist daher, selbst wenn er in Leichtmetall ausgeführt ist, recht massiv und damit schwer.

Aufgabe der Erfindung ist es, einen einfach herzustellenden Gurtstraffer mit geringem Gewicht zu schaffen.

Zu diesem Zweck ist bei einem Gurtstraffer der eingangs genannten Art vorgesehen, daß das Gehäuseteil T-förmig ausgebildet ist mit einem sich quer vom Zylinderrohr weg erstreckenden Fußabschnitt, der einstückig mit dem Zylinderrohr ausgebildet ist und einen Aufnahmeraum für den Antrieb bildet. Der in das Gehäuseteil integrierte Aufnahmeraum für den Antrieb macht einen separaten Sockelblock für den Antrieb überflüssig. Damit kann das Gewicht und der Montageschritt für den zusätzlichen Sockelblock eingespart werden. Durch die T-förmige Ausbildung des Gehäuseteils mit dem im Fußabschnitt untergebrachten Antrieb wird vermieden, daß der Abbrand des Antriebs ein im Gehäuseteil verlaufendes Zugmittel, beispielsweise ein Zugseil, unmittelbar beeinträchtigt.

Gemäß einem zweiten Aspekt schafft die Erfindung ein Verfahren zur Herstellung eines solchen Gurtstraffers, bei dem der Aufnahmeraum für den den Antrieb bildenden Fußabschnitt in dem Gehäuseteil durch Innenhochdruckumformung ausgebildet wird. Mit diesem Verfahren kann das Gehäuseteil in weniger Arbeitsschritten hergestellt werden. Für die Ausbildung des Fußabschnittes ist insbesondere kein zusätzliches Bauteil zu handhaben und am Gehäuseteil zu befestigen.

Vorteilhafte Ausführungsformen der Erfindung ergeben sich aus den Unteransprüchen.

Die Erfindung wird nachfolgend anhand einer bevorzugten Ausführungsform ausführlich beschrieben. Dabei wird Bezug genommen auf die beigefügten Zeichnungen. In den Zeichnungen zeigen:
Figur 1 einen Längsschnitt durch einen erfindungsgemäßen Gurtstraffer;
Figur 2 den vergrößerten Ausschnitt II aus Figur 1;
Figur 3 den vergrößerten Ausschnitt III aus Figur 1; und
Figur 4 einen Längsschnitt durch das Gehäuseteil des Gurtstraffers aus Figur 1 in einem Zwischenschritt des erfindungsgemäßen Herstellungsverfahrens.

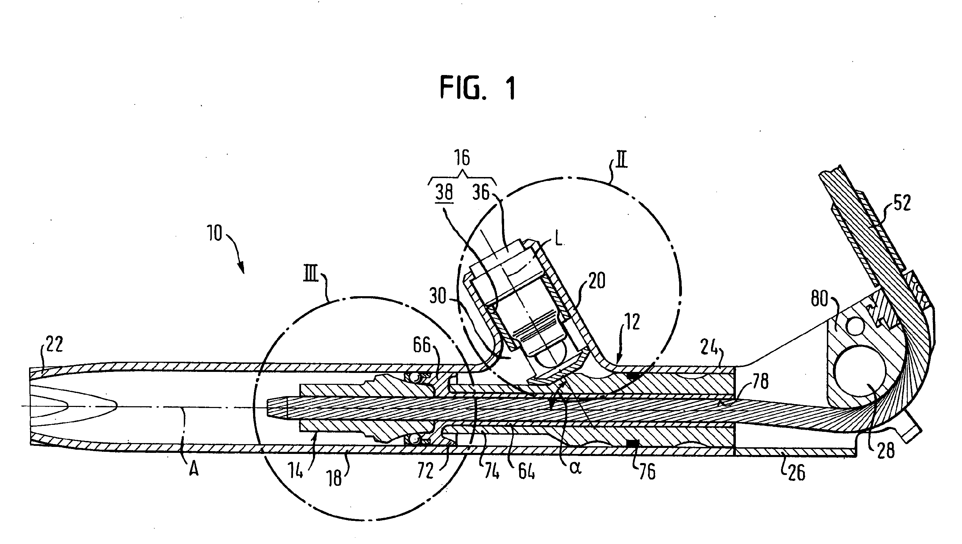

In Figur 1 ist ein Gurtstraffer 10 zu sehen, der einen Antrieb 16 und ein Gehäuseteil 12, in dem ein Kolben 14 verschiebbar geführt ist, aufweist.

Das Gehäuseteil 12 hat im wesentlichen die Form eines in den Figuren auf dem Kopf liegenden großen T, mit einem langgestreckten Zylinderrohr 18 und einem Fußabschnitt 20. Das Zylinderrohr 18, das eine Längsachse A des Gehäuseteils 12 definiert, hat ein vorderes Ende 22, ein hinteres Ende 24 und ist von kreisförmigem Querschnitt. Am vorderen Ende 22 ist das Zylinderrohr 18 konisch verengt, um ein Austreten des Kolbens 14 zu verhindern. Am hinteren Ende 24 ist ein Befestigungsteil 26 mit einer Befestigungsbohrung 28 zur Montage des Gurtstraffers 10 im Fahrzeug vorgesehen. Das Befestigungsteil 26 kann auch einstückig mit dem Gehäuseteil 12 ausgebildet sein.

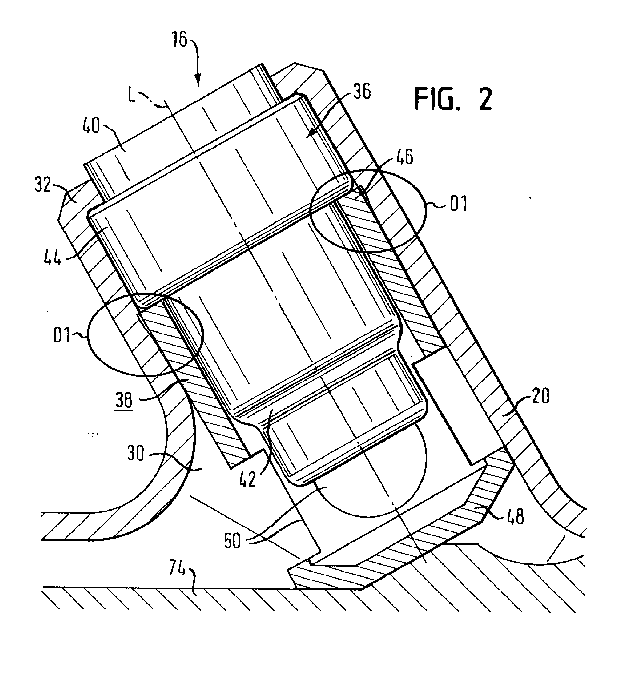

Der Fußabschnitt 20 erstreckt sich von der hinteren Hälfte des Zylinderrohrs 18 quer von der Längsachse A des Gehäuseteils 12 weg bis zu einem freien Ende 32 (siehe Figur 2) und bildet einen Aufnahmeraum 30 für den Antrieb 16. Der Fußabschnitt 20 weist vorzugsweise ebenfalls einen kreisförmigen Querschnitt auf, wobei seine Längsachse L die Längsachse A des Gehäuseteils 12 unter einem Winkel α schneidet.

Der Antrieb 16, der in Figur 2 vergrößert dargestellt ist, besteht aus einem Gasgenerator 36 und einer Gasgeneratorbuchse 38. Der Gasgenerator 36 weist einen Sockel 40, einen Körper 42 und einen Gürtel 44 auf, wobei der Durchmesser des Gürtels 44 größer ist als der Durchmesser des Sockels 40 und des Körpers 42. Der Sockel 40 ragt aus dem freien Ende 32 des Fußabschnitts 20 heraus. Der Rand des freien Endes 32 des Fußabschnitts 20 ist umgebördelt und hält den Gasgenerator 36 am Gürtel 44, der sich auf der Gasgeneratorbuchse 38 abstützt, fest. Der erfindungsgemäße Gurtstraffer eignet sich sowohl für Gasgeneratoren mit Steckverbindung als auch für solche mit Kabelanschlüssen.

Die Gasgeneratorbuchse 38 besteht aus einer topfartigen Hülse mit einem offenen Kopfende 46 und einem in Längsrichtung geschlossenen Fußende 48. Sie umhüllt den Körper 42 des Gasgenerators 36, wobei das Kopfende 46 am Gürtel 44 anliegt. Am Fußende 48 ist die Gasgeneratorbuchse 38 mit Bohrungen 50 versehen, durch welche das vom Gasgenerator 36 erzeugte Gas in das Innere des Gehäuseteils 12 austreten kann.

Die Gasgeneratorbuchse 38 ist elastisch mit einem sich flexibel anpassenden Durchmesser. Somit wird der Gasgenerator 36 durch die Gasgeneratorbuchse 38 nicht nur im Aufnahmeraum 30 positioniert, sondern auch gegen die Wand des Fußabschnittes 20 abgedichtet, deren Innendurchmessers möglicherweise toleranzbehaftet ist. Die Gasgeneratorbuchse 38 kann dazu vorteilhafterweise am Kopfende 46 im Durchmesser aufgeweitet oder verdickt sein, um insbesondere den in Figur 2 mit D1 bezeichneten Bereich wirksam abzudichten.

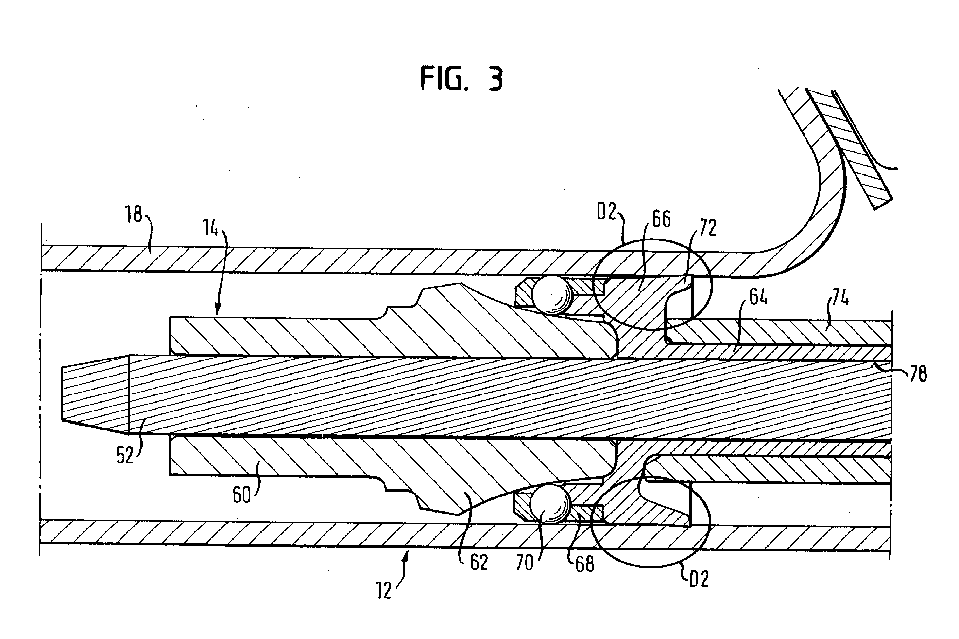

Der Kolben 14, der in Figur 3 genauer zu sehen ist, ist auf ein Ende eines Zugseils 52 aufgepreßt. Der Kolben 14 weist einen vorderen Zylinderabschnitt 60 und einen hinteren Konusabschnitt 62 auf, an den sich eine Schutzhülse 64 anschließt, die das Zugseil 52 zum Schutz gegen die heißen Gase des Gasgenerators 36 umgibt. Während die Schutzhülse 64 zum hinteren Ende 24 des Zylinderrohrs 18 hin das Zugseil 52 als dünner Mantel umgibt, bildet sie dort, wo sie an den Konusabschnitt 62 des Kolbens 14 grenzt, einen Stempel 66, der den Querschnitt des Zylinderrohrs 18 ausfüllt.

Der Stempel 66 ist an einem nach vorne weisenden Ende mit einer Krone 68 versehen, die den Konusabschnitt 62 umgibt und in welcher Kugeln 70 gelagert sind, die sich nach einem Gurtstraffvorgang beim Zurückziehen des Kolbens 14 zwischen der Wand des Zylinderrohres 18 und dem Konusabschnitt 62 verklemmen. Dadurch ist eine Rückzugsperre mit Gurtkraftbegrenzung gebildet, die aus dem Stand der Technik bereits bekannt ist und daher nicht näher beschrieben wird.

An dem nach hinten weisenden Ende des Stempels 66 ist eine umlaufende Dichtlippe 72 ausgebildet, die gegen die Wand des Zylinderrohres 18 drückt. Die Dichtlippe 72 gleicht Toleranzen im Innendurchmesser des Zylinderrohres 18 aus und bildet somit in dem in Figur 3 mit D2 bezeichneten Bereich eine Dichtung für den Kolben 14.

An seinem hinteren Ende 24 ist das Zylinderrohr 18 mit einer Führungshülse 74 verschlossen, die bis zum Stempel 66 reicht. Die Führungshülse 74 ist mit einer zur Längsachse A des Gehäuseteils 12 konzentrischen Durchgangsbohrung 78 versehen, in welcher das Zugseil 52 geführt ist. Außerdem ist die Führungshülse 74 mit einem Dichtring 76 gegen die Wand des Zylinderrohres 18 abgedichtet.

Das Zugseil 52 ist an einem Führungselement 80 im Befestigungsteil 26 umgelenkt und kann an seinem anderen Ende, das in den Zeichnungen nicht dargestellt ist, beispielsweise an einem Gurtendbeschlag oder an einem Gurtschloß befestigt sein.

Ein weiterer Vorteil des erfindungsgemäßen Gurtstaffers 10 besteht darin, daß der Durchmesser des Fußabschnitts 20 dem Durchmesser des Längsrohrs 18 entspricht, so daß die Baubreite des Straffers nicht breiter ist als der Außendurchmesser des Längsrohrs 18. Dies ist besonders vorteilhaft, wenn der Gurtstraffer 10 im beengten Bereich zwischen Sitz und Mitteltunnel eines Fahrzeugs verbaut werden soll.

In der gezeigten Ausführungsform ragt der Fußabschnitt 20 nach oben, so daß das Gehäuseteil 12 die Gestalt eines auf dem Kopf stehenden großen T besitzt. Selbstverständlich kann der Fußabschnitt 20 unter unterschiedlichen Winkeln α zur Längsachse A angeordnet sein. Alle derartigen Ausgestaltungen des Gehäuseteils 12 werden als T-förmig bezeichnet. Der Fußabschnitt 20 kann am Umfang des Gehäuseteils 12 auch radial in jeder beliebigen Orientierung bezüglich der Längsachse A ausgebildet sein, oder das Gehäuseteil 12 kann unter unterschiedlichen Orientierungen bezüglich der Längsachse A mit dem Befestigungsteil 26 verbunden werden, so daß mit nur einer Ausführungsform des Gehäuseteils 12 unterschiedliche Bauformen eines Gurtstraffers verwirklicht werden können. Die Variationsmöglichkeiten in der Ausgestaltung des Gehäuseteils 12 ermöglichen es, Bauraumbeschränkungen zu berücksichtigen und optimale Strömungsverhältnisse für das von dem Gasgenerator 36 erzeugte Gas anzustreben.

Das Gehäuseteil 12 mit dem integrierten Fußabschnitt 20 kann vorteilhaft als Stahlrohr ausgeführt sein, so daß sich eine erhebliche Gewichtseinsparung gegenüber beispielsweise Gurtstraffem mit einem Gasgeneratorgehäuse aus Zinkdruckguß ergibt. Die Gestalt des Zylinderrohres 18 ist nicht auf einen kreisförmigen Querschnitt beschränkt, sondern kann selbstverständlich auch eine andere Querschnittsform besitzen.

Der Fußabschnitt 20 kann auf verschiedene Weise am Gehäuseteil 12 ausgebildet werden, beispielsweise indem er angeschweißt wird. Er kann besonders vorteilhaft durch Verwendung der an sich bekannten Innenhochdruck-Umformung ausgebildet werden, wie es im nachfolgend beschriebenen Verfahren der Fall ist.

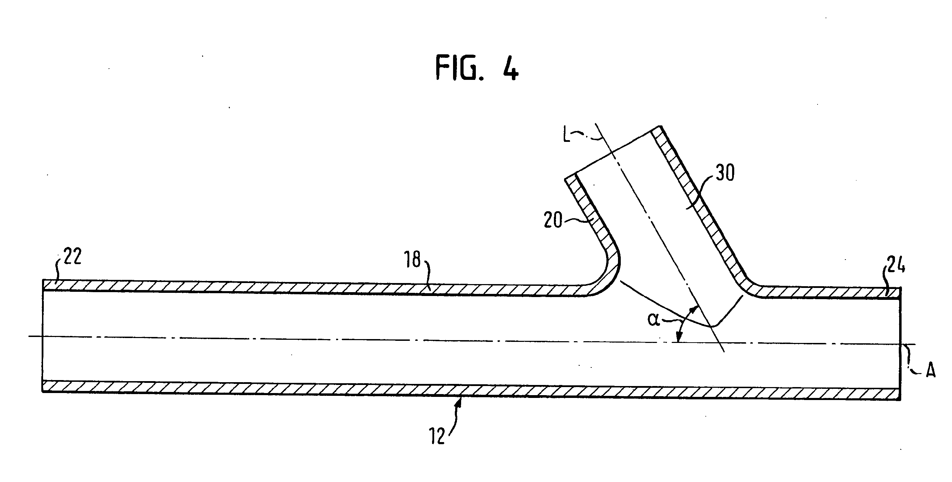

Bei der Herstellung des Gurtstraffers 10, wird in einem zylindrischen Rohr durch Innenhochdruck-Umformen ein Dom ausgeformt, der später den Fußabschnitt 20 bildet. Der Dom wird aufgeschnitten, so daß das in Figur 4 dargestellte Zwischenerzeugnis entsteht. Das vordere Ende 22 des Gehäuseteils 12 wird verengt, und der Kolben 14 und die Führungshülse 74 werden in das Gehäuseteil 12 eingeführt, wobei vorteilhaft die Dichtlippe 72 am Stempel 66 die insbesondere von dem Innenhochdruck-Umformen herrührenden Toleranzen im Durchmesser des Gehäuseteils 12 ausgleichen kann.

Zur Montage des Antriebs 16 wird der Gasgenerator 36 mit der Gasgeneratorbuchse 38 in den Fußabschnitt 20 eingeführt und darin positioniert, wobei die Gasgeneratorbuchse 38 durch ihre Elastizität wiederum eventuelle Toleranzen im Durchmesser des Fußabschnitts 20 ausgleichen kann. Die Befestigung des Antriebs 16 erfolgt durch Umbördeln des Randes am freien Ende 32 des Fußabschnitts 20. Vorzugsweise wird die Gasgeneratorbuchse 38 so weit eingeschoben, daß sie mit ihrem Fußende 48 an der Führungshülse 74 anliegt (Figur 2). Dadurch ist sie axial zwischen der Führungshülse 74 und dem umgebördelten freien Ende 32 fixiert.

## Patentansprüche

1. Gurtstraffer (10), mit einem Gehäuseteil (12), das ein langgestrecktes Zylinderrohr (18) aufweist, in dem ein Kolben (14) verschiebbar angeordnet ist, und mit einem Antrieb (16), der auf den Kolben (14) eine Antriebskraft ausüben kann, **dadurch gekennzeichnet, daß** das Gehäuseteil (12) T-förmig ausgebildet ist mit einem sich quer vom Zylinderrohr (18) weg erstreckenden Fußabschnitt (20), der einstückig mit dem Zylinderrohr (18) ausgebildet ist und einen Aufnahmeraum (30) für den Antrieb (16) bildet.

2. Gurtstraffer nach Anspruch 1, **dadurch gekennzeichnet, daß** der Fußabschnitt (20) angeschweißt ist.

3. Gurtstraffer nach Anspruch 1, **dadurch gekennzeichnet, daß** der Fußabschnitt (20) im Gehäuseteil (12) durch Innenhochdruck-Umformung hergestellt ist.

4. Gurtstraffer nach einem der vorhergehenden Ansprüche, **dadurch gekennzeichnet, daß** der Antrieb (16) einen Gasgenerator (36) und eine Gasgeneratorbuchse (38) aufweist.

5. Gurtstraffer nach Anspruch 4, **dadurch gekennzeichnet, daß** die Gasgeneratorbuchse (38) eine flexible Dichtung (46) aufweist.

6. Gurtstraffer nach einem der vorhergehenden Ansprüche, **dadurch gekennzeichnet, daß** der Kolben (14) mit einer flexiblen Dichtlippe (72) versehen ist.

7. Verfahren zur Herstellung eines Gurtstraffers (10) nach einem der vorhergehenden Ansprüche, **dadurch gekennzeichnet, daß** der den Aufnahmeraum für den Antrieb (16) bildende Fußabschnitt (20) in dem Gehäuseteil (12) durch Innenhochdruck-Umformung ausgebildet wird.
